(19) Europäisches Patentamt
European Patent Office
Office européen des brevets

(11) EP 4 751 989 A1

(12) EUROPEAN PATENT APPLICATION

(43) Date of publication:
03.06.2026 Bulletin 2026/23

(51) International Patent Classification (IPC):
B60L 58/12 (2019.01)

(21) Application number: 25208577.4

(22) Date of filing: 14.10.2025

(52) Cooperative Patent Classification (CPC):
B60L 58/12; B60L 2240/12; B60L 2240/64;
B60L 2240/68; B60L 2250/16; B60L 2260/46;
B60L 2260/52; B60L 2260/56

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 08.11.2024 US 202418942194

(71) Applicant: Harman International Industries, Inc.
Stamford, Connecticut 06901 (US)

(72) Inventors:
• Sehra, Suman A.
Folsom, CA, 95630 (US)
• Lee, Yun Ho
Pleasanton, CA, 94566 (US)
• Dey, Sumit
Ann Arbor, MI, 48103 (US)
• Yatagiri, Maria Praveen Kumar
Cupertino, CA, 95014 (US)

(74) Representative: Kraus & Lederer PartGmbB
Thomas-Wimmer-Ring 15
80539 München (DE)

(54) ELECTRIC VEHICLE RANGE ANXIETY MANAGEMENT

(57) A robust range prediction system is proposed that estimates the range of an electric vehicle (EV) during operation, using a range prediction model trained on data relevant to the energy usage of the vehicle. The range prediction model may take a greater number of inputs than may be considered by an OEM range estimator provided with the EV. The predicted range generated by the range prediction system may then be compared with the estimated range of the OEM range estimator, and/or combined into an integrated display to provide the driver with a confirmation of the estimated range, which may decrease a range anxiety of the driver. Additionally, the proposed range prediction system may generate recommendations for how to maximize (e.g., maintain or increase) the predicted range by adjusting the operation of the vehicle or coordinating operation of the vehicle with other vehicles, traffic signals, etc.

FIG. 4

start
402 Measure/estimate vehicle operating conditions
404 New range prediction model available? — YES → 406 Download and replace range prediction model
NO
408 Collect operational and environmental data from vehicle sensors and systems
410 Process collected data using range prediction model to generate a range prediction and predicted range gains of a plurality of range maximization actions
412 Receive data from and/or offload processing to cloud/edge server
414 Difference between range estimate and range prediction > threshold difference? — YES → 416 Calculate and display predicted range in integrated display in UI
NO
418 One or more range maximization actions worth taking?
NO
YES
420 Display driving recommendations corresponding to one or more range maximization actions in UI
422 Automatically perform the range maximization actions
424 Store driving data for further refinement of range prediction model
end

EP 4 751 989 A1

**Description**

TECHNICAL FIELD

Embodiments of the subject matter disclosed herein relate to reducing driver anxiety related to a range that electric vehicles can travel before recharging.

BACKGROUND

Electric vehicles (EVs) are becoming more popular and affordable as an alternative to conventional vehicles that run on fossil fuels. However, one of the main challenges that EV drivers face is uncertainty and anxiety about the remaining battery charge and driving range of their vehicles, especially in long-distance trips or unfamiliar routes. This is known as range anxiety, and it can affect the driving behavior, comfort, and satisfaction of EV drivers. Moreover, range anxiety can limit the adoption and usage of EVs, as drivers may prefer to stick to conventional vehicles that have more reliable and accessible refueling options. EVs typically come with a range estimator functionality that displays an estimated range of the EV based on a state of charge (SOC) of a battery of the EV. However, the estimated range may not be accurate, because road, traffic, weather, and other driving conditions may vary during operation of the EV.

SUMMARY

The current disclosure at least partially addresses the above identified issues by a method for a controller of an electric vehicle (EV), the method comprising collecting data from sensors and systems of the EV during operation of the EV; predicting a range of the EV based on the collected data using a range prediction model, and further predicting a plurality of range gains of the EV associated with performing one or more one or more range maximization actions of the EV based on the collected data, each range gain a predicted increase to the range of the EV resulting from performing a corresponding range maximization action of the one or more range maximization actions; comparing the predicted range to an estimated range of the EV generated by a range estimator included in the EV; and in response to determining that a difference between the predicted range and the estimated range is greater than a threshold difference, displaying the predicted range on a display of the EV; and displaying, on the display, one or more recommendations for the one or more range maximization actions to be performed at the EV to maintain or increase the range of the EV, the one or more range maximization actions recommended based on the predicted range gains of the one or more range maximization actions outputted by the range prediction model.

The above advantages and other advantages, and features of the present description will be readily apparent from the following Detailed Description when taken alone or in connection with the accompanying drawings. It should be understood that the summary above is provided to introduce in simplified form a selection of concepts that are further described in the detailed description. It is not meant to identify key or essential features of the claimed subject matter, the scope of which is defined uniquely by the claims that follow the detailed description. Furthermore, the claimed subject matter is not limited to implementations that solve any disadvantages noted above or in any part of this disclosure.

BRIEF DESCRIPTION OF THE DRAWINGS

Various aspects of this disclosure may be better understood upon reading the following detailed description and upon reference to the drawings in which:

FIG. 1 shows an exemplary EV charging ecosystem;
FIG. 2 shows a schematic diagram including components of an exemplary electric vehicle and an exemplary range prediction system of the electric vehicle charging ecosystem of FIG. 1;
FIG. 3 shows a schematic diagram of an exemplary range prediction model used by the range prediction system;
FIG. 4 is a flowchart illustrating an exemplary method for predicting a range of an EV and providing a driver of the EV with options for maximizing the range;
FIG. 5 is a flowchart illustrating an exemplary method for using cooperative driving to increase a range of the EV; and
FIG. 6 shows an exemplary graphical user interface for displaying a predicted range of EV.

The drawings illustrate specific aspects of the described systems and methods. Together with the following description, the drawings demonstrate and explain the structures, methods, and principles described herein. In the drawings, the size of components may be exaggerated or otherwise modified for clarity. Well-known structures, materials, or operations are not shown or described in detail to avoid obscuring aspects of the described components, systems, and methods.

DETAILED DESCRIPTION

A plug-in electric vehicle (EV) operates on electricity stored in one or more batteries of the EV. When the stored electricity decreases below a threshold, the one or more batteries may be recharged at a charging station. A current amount of battery power available to the EV may be displayed to a driver, so that the driver can determine when to recharge the EV. Additionally, current systems of the EV generated by an original equipment manufacturer (OEM) of the EV may estimate a range of the vehicle, meaning, a distance that the EV can travel before having to recharge, based on the current amount of battery power and current driving conditions. However, the estimated range may not be stable, and may change as a result of driving behaviors and changing conditions. The estimated range may be estimated based on efficient driving behaviors, where if the driver operates the vehicle in a less efficient manner, the estimated range may decrease, which may cause anxiety in the driver. The estimated range may also not take into consideration changes in routes, weather, traffic, etc., which may also decrease the estimated range. EV range anxiety is common in drivers when the estimated EV range is not reliable.

To address this issue, a more robust range prediction system is proposed that estimates the range of the EV on a continuous, regular, or periodic basis, based on a greater number of inputs than may be considered by an OEM range estimator. The predicted range generated by the range prediction system may then be compared with the estimated range of the OEM range estimator. The predicted range and the estimated range may both be displayed on a display screen of the EV, or may be combined into an integrated display that more accurately indicates a distance that the EV can travel before recharging. In some examples, the predicted range may always be displayed, or may be displayed when the predicted range differs from the estimated range by a threshold difference. In this way, the presence of the predicted range may provide the driver with a confirmation or validation of the estimated range, which may increase a confidence of the driver in the range of the EV.

Additionally, the proposed range prediction system may generate recommendations for how to maximize (e.g., maintain or increase) the predicted range by adjusting the operation of the vehicle. This may include, for example, moderating a speed of the vehicle in various scenarios (lights, hills, etc.), deciding which lane to drive in or how the EV should be maneuvered through traffic or around obstacles, selecting one route over another, etc. The recommendations may also include recommendations for coordinating driving with other nearby vehicles or elements of infrastructure along the route (e.g., traffic lights, tolls, etc.) to obtain greater vehicle efficiencies. For example, the EV and the nearby vehicles may be operated as a group that travels at a same speed, also referred to as platooning. The operation of the EV may be coordinated with traffic lights, or traffic lights may be coordinated with the operation of the EV. The EV may also be rerouted to avoid traffic detected along a route of the EV.

To accomplish this, a range prediction model may be trained on data relevant to the energy usage of the vehicle to predict the range of the EV. In various examples, the range prediction model may be a machine learning (ML) or deep learning (DL) neural network model. In other examples, the range prediction model may be a statistical or probabilistic model, or a rules-based model (e.g., a decision tree) trained on historical data or generated by human experts. The range prediction model may be trained to receive as input various system and sensor data of the EV, including in-vehicle data from onboard sensors (e.g., vehicle load and speed, recent efficiency calculations, route, etc.), static data such as geographical data of the route, EV charging infrastructure data, etc.), and dynamic data road condition data, weather condition data, traffic data, etc.), and output a predicted range of the EV based on the received data.

Additionally, the range prediction model may be trained to rate each of a plurality of actions that could be taken at the vehicle to maximize the range of the EV, referred to herein as range maximization actions. The range maximization actions may include adjusting a speed of the vehicle by accelerating or braking, changing a lane of the vehicle, changing a route of the vehicle, and/or engaging in coordinated operation with one or more vehicles travelling on the route of the EV.

Specifically, the range prediction model may be trained to output, in addition to the predicted range of the EV, specific range gains associated with each of a plurality of predetermined range maximization actions. For example, a first range maximization action may be adjusting a speed of the vehicle, where operation of the EV at a first speed may be more efficient than operating the EV at a second, different speed, resulting in a first increase (e.g., gain) in the predicted range; a second range maximization action may be a lane selection of the vehicle, where the EV may save energy by selecting a specific lane of traffic on a highway, based on detected/predicted traffic on the highway, resulting in a second increase in the predicted range; a third range maximization action may be the adoption of a strategy for navigating traffic lights, where the operation of the EV may be more efficient if the strategy is followed (e.g., adjusting a driving speed based on light timing, etc.), resulting in a third increase in the predicted range; and so on. At periodic intervals, current vehicle and environmental data may be inputted into the range prediction model, and a plurality of specific range gains for the different range maximization actions may be outputted by the range prediction model. An algorithm may then be applied to the range gains predicted by the range prediction model for each range maximization action to determine whether to display one or more driving recommendations to the driver. The driving recommendations may include visual indicators for the driver to adjust vehicle speed, change lanes, switch routes, etc., based on the relative range gains generated by the range prediction model. If the driver follows the recommendations, the range prediction model may predict a greater range of the EV in a subsequent iteration.

In this way, the proposed range prediction system aims to provide EV drivers with accurate, personalized, and adaptive information and recommendations on how to manage their battery charge and driving range, considering various factors such as driving style, traffic conditions, weather, road topology, charging station availability, and user preferences. The system also learns from the user feedback and behavior to improve its performance and reliability over time.

Further, in autonomous or semi-autonomous driving embodiments, the range prediction system may perform active in-vehicle maneuvering methods to achieve the efficiencies indicated by the range prediction model. That is, the range prediction system may also engage vehicle operation control directly, to adjust speed, lane changes, re-route the EV, or perform other operational controls to maximize the range of the EV. This may include collaborating with other vehicle and traffic lights to form more efficient air dynamic operation and optimize speed and brake control, lane changes, route selection, etc., to optimize battery efficiency while driving. The in-vehicle maneuvering methods may rely on wireless connectivity and telematics system integration with cloud and/or edge compute instances, vehicle-to-infrastructure (V2X) communications, external sensors, other vehicles, and available service providers, where the analysis and computation may be performed in the cloud, edge computer, and EV system in the way to optimize the system load balance and provide more reliable EV range.

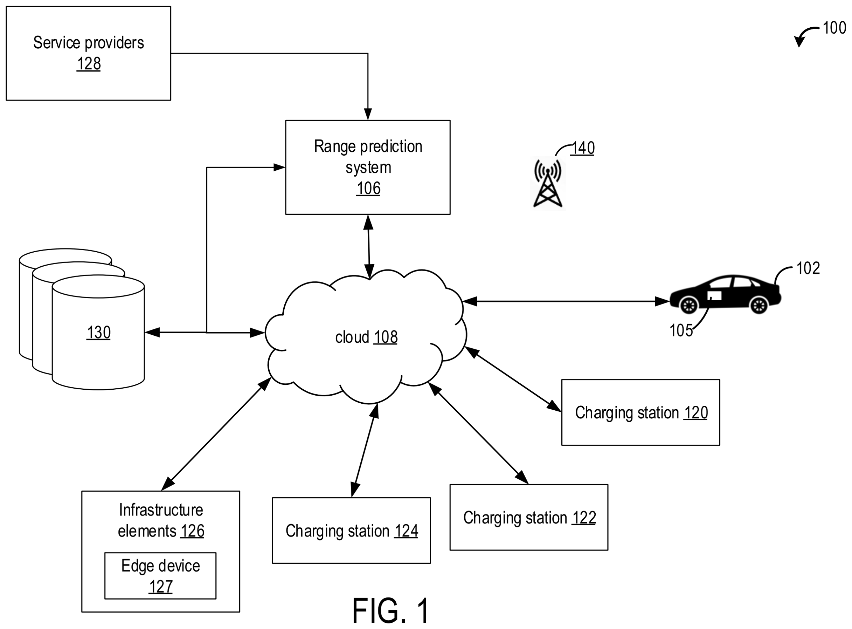

Referring now to the figures, FIG. 1 shows an electric vehicle charging ecosystem 100, including an EV 102, a plurality of charging stations 120, 122, and 124, and a range prediction system 106. EV 102 may be a plugin hybrid vehicle, a range extended hybrid vehicle, an electric traction or battery or plugin vehicle, or a different type of electric vehicle. EV 102 may be a car, light or heavy truck, bus, or any other type of vehicle operated on roadways and charged via an electric charging station. Charging stations 120, 122, and 124 may be installed at a residential home or outside a residential home, for example, at a public (e.g., non-networked) or private (e.g., networked) charging station. In some examples, charging stations 120, 122, and 124 may be mobile charging stations, where energy is supplied at a non-fixed location. Charging stations 120, 122, and 124 may be connected to an electric grid, which may receive power from a utility company that is generated at one or more energy sources including renewable energy sources (e.g., solar, wind, hydroelectric, nuclear, geothermal), and non-renewable energy sources (e.g., generated from fossil fuels).

EV 102 and charging stations 120, 122, and 124 may be wirelessly connected to a cloud 108 (e.g., the Internet) via a wireless network 140. As such, EV 102 may be communicably coupled to each of charging stations 120, 122, and 124. A controller 105 of EV 102 may transmit information to and/or receive information from one or more of charging stations 120, 122, and 124. The information exchanged between EV 102 and the charging stations 120, 122, and 124 may include location information of EV 102 and the charging stations 120, 122, and 124 and/or distances between EV 102 and each of charging stations 120, 122, and 124. The information exchanged may be used by a driver of EV 102 to select a desired charging station to recharge EV 102. For example, the driver may use the information to select a charging station closest to EV 102, or closest to a point on a route of EV 102. In the case of mobile charging stations, the driver may use the information to select a mobile charging station having a closest predicted or pre-established rendezvous point.

When travelling on battery power, a current range of EV 102 may be estimated by controller 105. For example, a range estimator functionality may be included at EV 102 by an OEM of EV 102. The range estimator may estimate how many miles EV 102 can travel on a current charge of a battery of EV 102. However, an estimate of the range estimator may not be accurate.

For example, EV 102 may be traveling on a route at a first distance of 25 miles from charging station 120, at a second distance of 75 miles from charging station 122, and at a third distance of 100 miles from charging station 124. At a first time, the range estimator may estimate that EV 102 has a range of 90 miles. As a result of the estimated range of 90 miles being greater than the second distance to charging station 122 (75 miles), the driver may not recharge EV 102 at charging station 120, and may drive past charging station 120 with the intention of charging EV 102 at charging station 122. At a second time, EV 102 may be 10 miles past charging station 120 and still 40 miles away from charging station 122. Based on the original estimated range, the driver may expect the range of the vehicle to now be 55 miles, which is sufficient to reach charging station 122.

However, at the second time, the range estimator may predict that EV 102 has a range of only 40 miles. As a result of the decrease in the estimated range, the driver may become anxious about having sufficient power to reach charging station 122, in anticipation that the estimated range is unreliable and may continue to decrease. The driver is presented with a dilemma: return to charging station 120 to safely recharge, at the cost of wasted time and energy, or continue to charging station 122 and risk running out of power, further increasing the anxiety of the driver.

To address this problem, range prediction system 106 may provide the driver with a level of confidence of the accuracy of the estimated range. Range prediction system 106 may retrieve location, route, vehicle, and driving data of EV 102 wirelessly over a wireless network 140. Based on the location and route, range prediction system 106 may retrieve traffic, weather, and other data from various edge devices 127 installed at various infrastructure elements 126 in a vicinity of EV 102 or along the route of EV 102. Range prediction system 106 may retrieve historical, statistical or other data on traffic, road conditions, etc. on the route from one or more databases 130. Range prediction system 106 may retrieve other relevant data from one or more service providers 128, such weather or traffic services not available to EV 102. Based on the collected and aggregated data, a range prediction model of range prediction system 106 may generate a predicted range of EV 102. Range prediction system 106 may then send the predicted range to EV 102 for display to a driver of EV 102. Alternatively, range prediction system 106 may train the range prediction model on data received from a plurality of EVs similar to EV 102, and after training, range prediction system 106 may send a copy of the range prediction model to EV 102 to be deployed at EV 102.

Additionally, range prediction system 106 may generate and display recommendations to the driver regarding how the vehicle may be operated to maintain or preserve the predicted range of EV 102. If the driver follows the recommendations, the range of EV 102 may be maximized.

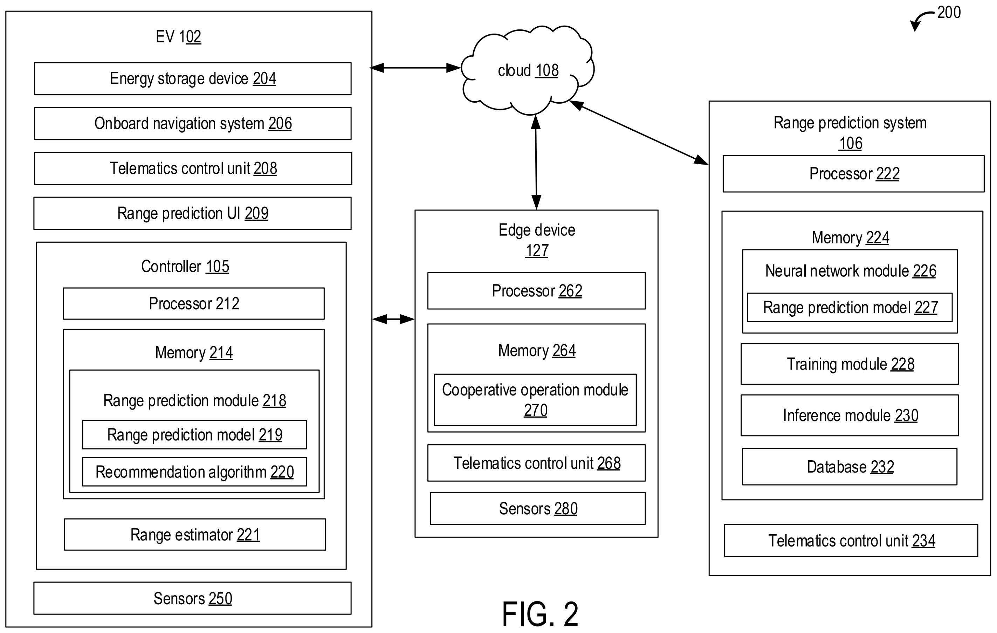

Referring now to FIG. 2, a schematic diagram 200 shows EV 102 in communication with range prediction system 106 and edge device 127 via cloud 108 of the electric vehicle charging ecosystem of FIG. 1. Various components of range prediction system 106 and various components of EV 102 relevant to charging EV 102 are shown. Edge device 127 may be installed in an exemplary element of infrastructure located on a route of EV 102 (e.g., infrastructure elements 126).

Range prediction system 106 includes at least a processor 222 and a memory 224. As described herein, a memory (such as memory 224) may include one or more data storage structures, such as optical memory devices, magnetic memory devices, or solid-state memory devices, for storing programs and routines executed by a processor (e.g., processor 222) to carry out various functionalities disclosed herein. Memory may include any desired type of volatile and/or non-volatile memory such as, for example, static random access memory (SRAM), dynamic random access memory (DRAM), flash memory, read-only memory (ROM), etc. Processor 222, as well as other processors described herein, may be any suitable processor, processing unit, or microprocessor, or a multi-processor system including one or more additional processors that are identical or similar to each other and that are communicatively coupled via an interconnection bus.

Memory 224 may store a neural network module 226, a network training module 228, an inference module 230, and a database 232. Neural network module 226 may include one or more deep learning models (e.g., neural networks), and instructions for implementing the one or more deep learning models, as described in greater detail below. Neural network module 226 may include trained and/or untrained neural networks and may further include various data, or metadata pertaining to the one or more neural networks stored therein. In particular, neural network module 226 may include a range prediction model 227, which may predict a range of an EV such as EV 102. Range prediction model 227 may also predict a set of range gains that may be achieved by applying one or more range maximization actions that may increase an efficiency of an EV such as EV 102 and/or maximizing a range of the EV, as described in greater detail below.

Memory 224 may further store a training module 228, which may comprise instructions for training one or more of the neural networks stored in neural network module 226. Training module 228 may include instructions that, when executed by processor 222, cause range prediction system 106 to train a neural network model, such as range prediction model 227. In some embodiments, training module 228 may include instructions for implementing one or more gradient descent algorithms, applying one or more loss functions, and/or training routines, for use in adjusting parameters of one or more neural networks of neural network module 226. Training module 228 may include training datasets for the one or more neural networks of neural network module 226.

Memory 224 also stores an inference module 230. Inference module 230 may include instructions for deploying a trained deep learning model, such as training range prediction model 227 to predict a range of an EV such as EV 102 and/or relative contributions of different range maximization actions towards increasing an efficiency of an EV such as EV 102 and/or maximizing a range of the EV, as described in greater detail below.

Memory 224 further stores database 232. Database 232 may include, for example, one or more training sets for training the one or more neural networks of neural network module 226.

In some embodiments, memory 224 may include components disposed at two or more devices, which may be remotely located and/or configured for coordinated processing. In some embodiments, one or more aspects of memory 224 may include remotely-accessible networked storage devices configured in a cloud computing configuration.

Range prediction system 106 includes a telematics control unit (TCU) 234. TCU 234 may facilitate transmission of various types of electronic data between range prediction system 106 and one or more systems of EV 102 and/or other elements of electric vehicle charging ecosystem 100 of FIG. 1, including other EVs. In particular, TCU 234 may facilitate wirelessly receiving data collected at EV 102, including operational data of EV 102 (energy usage, speed, route and/driving data, etc.) and environmental data (e.g., weather, temperature, etc.) via cloud 108 to be used to train range prediction model 227. TCU 234 may additionally facilitate transmitting a trained range prediction model 227 (e.g., range prediction model 219) from range prediction system 106 to EV 102.

EV 102 includes at least one energy storage device 204, an onboard navigation system 206, a TCU 208, a range prediction user interface (UI) 209, and controller 105. Controller 105 may include one or more processors 212 and a memory 214. Memory 214 may store a plurality of battery charging parameters including charge event parameters, such as charging time information, including starting times and ending times of previous charge events, and ignition-on/ignition-off times; a charging energy source type, a current state of charge (SOC), a SOC at the charge start time, a SOC at the charge end time, and/or other parameters. The battery charging parameters may also include a battery type, a compatible charger type, and historical data including driver preferences for stopping locations and times, and/or other parameters.

Controller 105 may include a range estimator 221, which may estimate a range of EV 102 based on the SOC and driving conditions. Range estimator 221 may be installed in the vehicle by an OEM of EV 102 and may be used conventionally to indicate to a driver of EV 102 how many miles EV 102 may continue to travel at current driving conditions before having to recharge energy storage device 204. However, range estimates generated by range estimator 221 may not be accurate, as driving conditions and/or environmental conditions may vary during operation of EV 102.

Controller 105 also includes a range prediction module 218, which may generate and display a predicted range of EV 102 to the driver, which may be used to confirm an accuracy of a range estimate of EV 102 generated by range estimator 221. Range prediction module 218 may also generate recommendations for extending or maximizing the predicted range by adjusting an operation of EV 102. For such purpose, range prediction module 218 may include a trained range prediction model 219, which may be a copy of range prediction model 227 of range prediction system 106. Range prediction model 219 may take as input various vehicle data, route data, environmental data received from external sensors and systems of EV 102, and output the predicted range and a plurality of range gains associated with different range maximization actions that may be performed at EV 102 to maintain or increase the predicted range. Because range prediction model 219 may take as input more data than range estimator 221, range prediction module may predict the range of EV 102 with more accuracy that range estimator 221.

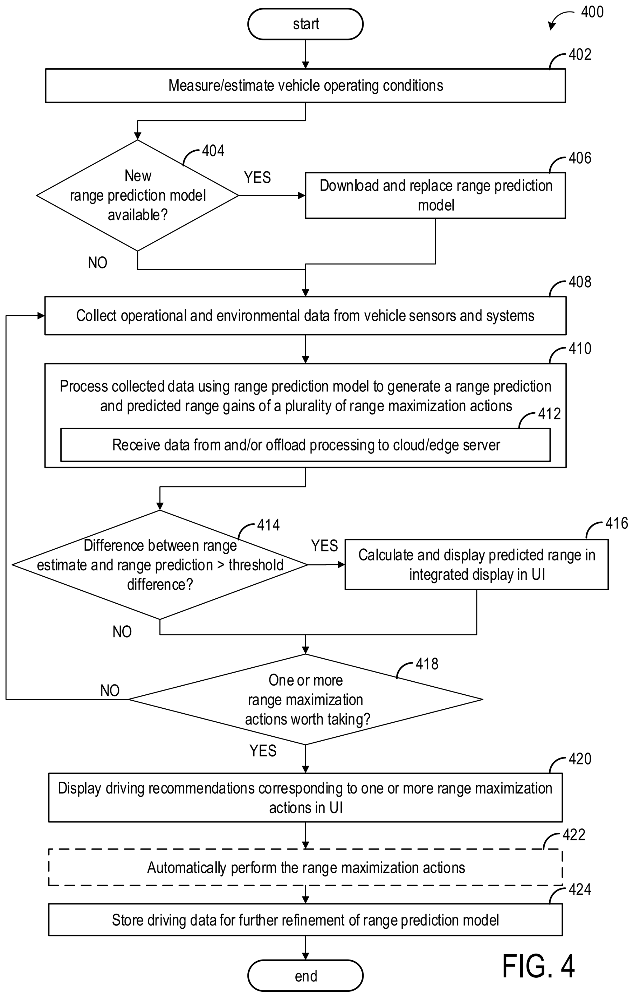

Range prediction module may also include a recommendation algorithm 220, which may receive the plurality of range gains associated with different range maximization actions and formulate one or more driving recommendations to be applied at EV 102 to maximize the predicted range, either by the driver or controller 105 in an automated or semi-automated driving mode. Recommendation algorithm 220 is described in greater detail below in reference to FIG. 4.

Energy storage device 204 may be a traction battery that stores electricity used to propel wheels of EV 102. The electricity may be received by energy storage device 204 when EV 102 is charged, for example, at a charging station (e.g., charging station 120), or when plugged into an electric grid via a power outlet such as at a home of a driver of EV 102. In some embodiments, energy storage device 204 may include an energy storage device controller, which may provide charge balancing between various storage elements (e.g., battery cells) of energy storage device 204 and communication with other vehicle controllers. A flow of power into and out of electric energy storage device 204 may also be controlled by the energy storage device controller, or by a power distribution module of the energy storage device controller of energy storage device 204.

Onboard navigation system 206 may provide route information to the driver of EV 102, including a current location of EV 102 and a destination of EV 102. For example, when operating EV 102, the driver may enter a destination into onboard navigation system 206. Onboard navigation system 206 may indicate one or more routes from the current location to the destination on a map displayed by onboard navigation system 206. In various embodiments, the map may be displayed on a screen of a display of onboard navigation system 206, such as a dashboard display. The driver may select a route of the one or more routes, and onboard navigation system 206 may provide instructions to the driver and/or indicate a progress of EV towards the destination on the map. Onboard navigation system 206 may additionally display information such as an estimated distance to the destination, an estimated time of arrival at the destination based on a speed of the vehicle, indications of traffic on the route, and/or other information of use to the driver. Route information included in onboard navigation system 206 may be used by range prediction module 218 to predict the range of EV 102, as described below.

In some embodiments, onboard navigation system 206 may not be included in EV 102, and onboard navigation system 206 may be an independent navigation system communicably coupled to EV 102. For example, onboard navigation system 206 may be an application (e.g., Google Maps) installed on a mobile device communicably coupled to EV 102. The independent navigation system may be linked to one or more displays of EV 102, where route information is displayed on the one or more displays, and/or the route information may be displayed on the mobile device (e.g., in a user interface of the application).

TCU 208 may control a communication between one or more controllers of EV 102 and cloud 108 and/or external elements of infrastructure. The external elements of infrastructure may include one or more charging stations, such as charging stations 120, 122, and 124, and infrastructural elements 126, which may include traffic lights, toll stations, and other elements of infrastructure located on roads traveled by EV 102 with wired or wireless communication capabilities. The communication may include wired communication, for example, via a cable communicatively coupling EV 102 with a charging station, or the communication may include wireless communication, for example, via a modem, or via a radio frequency (RF) transceiver. For example, EV 102 may communicate with a charging station (for example, during a charge event) via Bluetooth®, or via a different RF protocol.

TCU 208 may facilitate transmission of various types of electronic data within and/or among one or more systems of EV 102 and/or electric vehicle charging ecosystem 100 of FIG. 1, including other EVs. In particular, TCU 208 may facilitate wirelessly transmitting data collected at EV 102, including operational data of EV 102 (energy usage, speed, route and/driving data, etc.) and environmental data (e.g., weather, temperature, etc.) to range prediction system 106 via cloud 108 to be used to train range prediction model 227. TCU 208 may additionally facilitate receiving and updating trained range prediction model 219 from range prediction system 106.

In other examples, TCU 208 may facilitate wirelessly receiving range predictions and related information from range prediction system 106 via cloud 108. For example, EV 102 may send vehicle location and route information to range prediction system 106, and range prediction system 106 may send EV 102 a recommendation regarding where to charge EV 102. The location and route information may be retrieved from onboard navigation system 206. The related information may include predicted increases to the predicted range associated with various actions that may be taken or options that may be selected by a driver of EV 102, where the predicted range gains may be used to generate driving recommendations to the driver. In some examples, the predicted range gains may be received at EV 102 via TCU 208, and range prediction module 218 may recommend or prioritize options or actions based on the predicted range gains.

Communication via TCU 208 can be implemented using one or more protocols. TCU 208 may include a wired interface (e.g., a data bus, a Universal Serial Bus (USB) connection, etc.) and/or a wireless interface (e.g., radio frequency, infrared, near field communication (NFC), etc.). For example, TCU 208 may communicate via wired local area network (LAN), wireless LAN, wide area network (WAN), etc. using any past, present, or future communication protocol (e.g., BLUETOOTH™, USB 2.0, USB 3.0, etc.).

Additionally, TCU 208 may be configured to encrypt communications transmitted from EV 102 to recipients of the communications, such as range prediction system 106, and decrypt communications received at EV 102 from transmitters including range prediction system 106. In other words, TCU 208 may establish a secure, anonymous connection with range prediction system 106; subsequently transmit information to range prediction system 106 via the secure anonymous connection; and receive information from range prediction system 106 via the secure anonymous connection. By sending and receiving encrypted communications via the secure anonymous connection, a privacy of data of EV 102, a driver of EV 102, and/or an owner of EV 102 may be protected.

Range prediction UI 209 may include a display (e.g., a display screen) mounted on a dashboard of EV 102, and one or more controls (e.g., such as buttons) for navigating and/or selecting items displayed in range prediction UI 209. In some embodiments, the display may be a touchscreen display, where the one or more controls are integrated into the display and a user (e.g., an operator of EV 102) may navigate and/or select items by selecting graphical control elements displayed on the touchscreen display. In some embodiments, range prediction UI 209 may share components with or be integrated into a different UI or display of EV 102. Range prediction UI 209 may display a predicted range of EV 102, which may be generated by range prediction module 218.

EV 102 includes a plurality of sensors 250. Sensors 250 may measure and collect data about operating conditions of EV 102, such as a speed of the vehicle, a load or weight of the vehicle, an SOC and a rate of consumption of energy by energy storage device 204, braking and steering data, and the like. Sensors 250 may also include environmental sensors, such as external temperature sensors, inclinometers, anemometers (to measure a wind speed on EV 102), altimeters, accelerometers, gyros, radar and/or lidar, etc. In some examples environmental information may also be inferred from controls of the vehicle. For example, window wiper controls may indicate rain or snow, headlight controls may indicate poor visibility, exterior cameras may be used to determine weather, road, or traffic conditions, LIDAR/radar may be used to determine a proximity of neighboring vehicles and relative speed or direction, etc.

In some examples, preprocessing may be performed on data acquired by sensors 250 by controller 105. For example, sensor and system data of EV 102 may be collected over a predetermined time period or distance, and averaged to determine average values (e.g., speeds, temperatures, energy consumption rates, etc.) and/or other statistical information. The average values and other statistical information may be used by range prediction module 218 and/or range prediction system 106 to predict the range of EV 102. Additionally, in some examples, various sensors 250 may be analyzed in conjunction, for example, to determine trajectory information of the vehicle. For example, three dimensional trajectory information of EV 102 could be generated using altimeter, accelerometer, and gyro data, and/or other sensor data, when a cellular connection of the vehicle is lost.

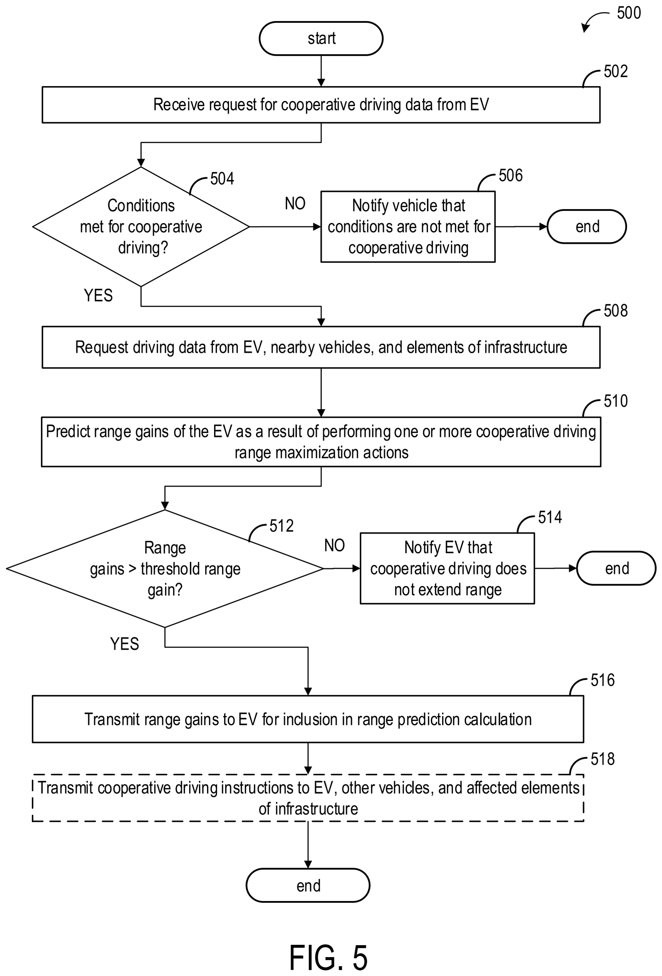

Edge device 127 includes a processor 262 and a memory 264, which may be similar to processors 212 and 222 and memories 214 and 224, respectively; a TCU 268, which may be similar to TCUs 208 and 234 of EV 102 and range prediction system 106, respectively; and a plurality of sensors 280, which may measure and collect data of an environment of edge device 127. In one example, edge device 127 is installed at a traffic light, and edge device 127 measures and collects data with respect to traffic and driving conditions at the traffic light. Edge device 127 may receive requests for data from EV 102 and/or range prediction system 106 via TCU 268, and may transmit data collected at edge device 127 to EV 102 and/or range prediction system 106 via TCU 268. In particular, data transmitted by edge device 127 may be used to instruct or control an operation of EV 102 in a cooperative driving mode, where the operation of EV 102 may be coordinated with the operation of other vehicles in a proximity of EV 102 on a route of EV 102. The data, instructions, or controls for operating EV 102 in the cooperative driving mode may be generated by a cooperative operation module 270 stored in memory 264. The operation of EV 102 in the cooperative driving mode is described in greater detail below in reference to FIG. 5.

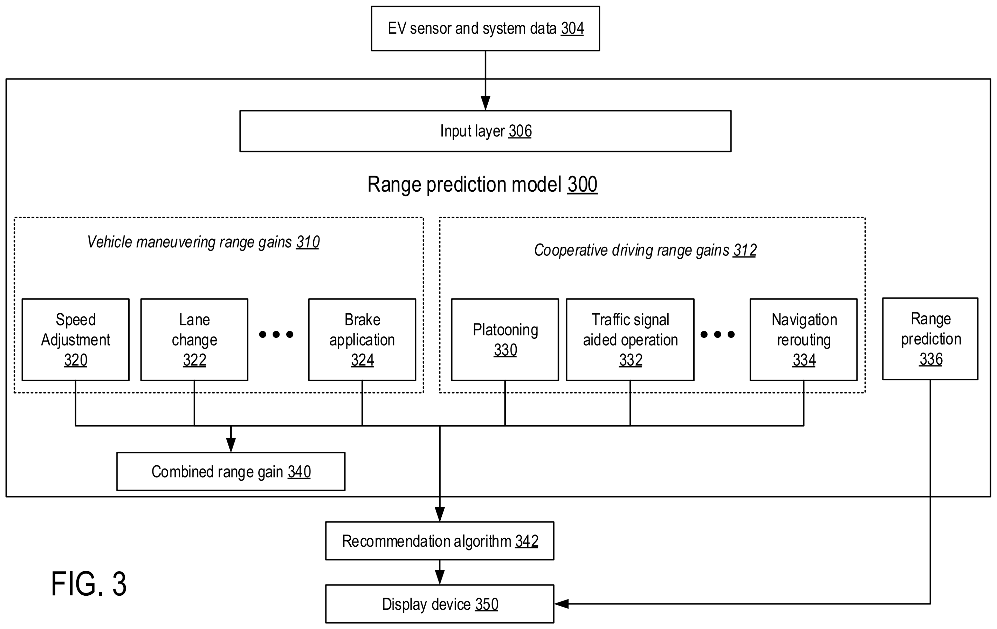

FIG. 3 shows an exemplary range prediction model 300, which may be a non-limiting example of range prediction model 227 of range prediction system 106 and/or range prediction model 219 of EV 102 of FIG. 2. As described in greater detail in reference to method 400 of FIG. 4 below, range prediction model 300 may be used to predict a range of an EV such as EV 102, and additionally predict a plurality of range gains associated with various range maximization actions that may optionally be taken at the EV to maintain, increase, or maximize the range.

Range prediction model 300 receives EV sensor and system data 304 from an EV at an input layer 306. Range prediction model 300 processes the received EV sensor and system data 304 to generate a plurality of outputs at an output layer, including a range prediction 336 of the EV, a plurality of predicted vehicle maneuvering range gains 310, and a plurality of predicted cooperative driving range gains 312. The predicted vehicle maneuvering range gains 310 may include predicted increases in the range of the EV based on various operations (e.g., range maximization actions) that may be performed at the EV at a specific time at which the outputs of range prediction model 300 are generated, either automatically or via a driver.

For example, vehicle maneuvering range gains 310 may include a speed adjustment range gain 320, which may indicate a first predicted increase to the range of the EV as a result of accelerating or decelerating the EV at the time of the output; a lane change range gain 322, which may indicate a second predicted increase to the range of the EV as a result of switching lanes at the time of the output; a brake application range gain 324, which may indicate a third predicted increase to the range of the EV as a result of applying a brake of the EV at the time of the output; and so on. It should be appreciated that the example range gains provided herein are for illustrative purposes, and range prediction model 300 may output a greater or different number of vehicle maneuvering range gains without departing from the scope of this disclosure.

Cooperative driving range gains 312 may include, for example, a platooning range gain 330, which may indicate a fourth predicted increase to the range of the EV as a result of coordinating driving the EV with other nearby vehicles at the time of the output (e.g., where a speed of the EV is matched with the nearby vehicles). In other words, vehicles travelling near the EV on a route of the EV may be grouped together to form greater aerodynamic air flow to reduce air friction and aerodynamic drag of the EV. As a result of being grouped together, an EV battery consumption may be reduced, especially when there is a strong head wind. Vehicle platooning can be accomplished in different vehicle configurations. For example, vehicles may be aligned front-to-back, side by side, or even diagonally, depending on a direction of the wind.

Cooperative driving range gains 312 may include a traffic signal aided operation range gain 332, which may indicate a fifth predicted increase to the range of the EV as a result of coordinating the operation of the EV with one or more traffic lights on a route of the EV. Coordinating the operation of the EV with the one or more traffic lights may result in a reduced acceleration and/or braking, which may result in saved energy. Coordinating the operation of the EV with the one or more traffic lights may include either adjusting the operation of the EV to efficiently navigate the one or more traffic lights using Green Light Optimal Speed Advisory (GLOSA) data available to the EV, or in some examples, adjusting the operation of the one or more traffic lights to accommodate the EV or a platoon of coordinated EVs. Cooperative driving range gains 312 may include a navigation rerouting range gain 334, which may indicate a sixth predicted increase to the range of the EV as a result of rerouting the EV to a more efficient route. As with vehicle maneuvering range gains 310, it should be appreciated that the example range gains provided herein are for illustrative purposes, and range prediction model 300 may output a greater or different number of cooperative driving range gains without departing from the scope of this disclosure.

Range prediction 336 outputted by range prediction model 300 may be transmitted (e.g., by the range prediction system) to the EV, and a controller of the EV (e.g., controller 105) may display range prediction 336 to the driver on a display device 350 of the EV (e.g., (e.g., in range prediction UI 209). The vehicle maneuvering range gains 310 and the cooperative driving range gains 312 outputted by range prediction model 300 may be inputs to a recommendation algorithm 342 (recommendation algorithm 220), which may output one or more specific driving recommendations to the driver based on the vehicle maneuvering range gains 310 and the cooperative driving range gains 312. For example, if a largest range gain is predicted for platooning, recommendation algorithm 342 may recommend to the driver on display device 350 that the driver coordinate driving with nearby vehicles to reap greater energy efficiencies.

During a training stage of range prediction model 300, EV sensor and system data 304 may be received from a plurality of EVs. For example, range prediction model 300 may be trained at a range prediction system installed on a server in a cloud (e.g., cloud 108), and the plurality of EVs may wirelessly communicate with the range prediction system.

In various embodiments, range prediction model 300 may be a deep neural network with a plurality of hidden layers. In some examples, range prediction model 300 may be or include a convolutional neural network (CNN). In other examples, range prediction model may be or include a long short-term memory (LSTM) recurrent neural network with one or more convolutional layers and one or more LSTM layers, and range prediction model 300 may be trained to analyze patterns in driving data over the course of a journey and make predictions regarding the range of the EV based on the patterns.

Range prediction model 300 may be trained using supervised learning on training data comprising one or more sets of training pairs generated from the EV sensor and system data 304. The training pairs may include EV sensor and system data 304 generated at individual points in time as input data, and may include ground truth data generated from EV sensor and system data 304 that is collected and analyzed over longer time periods (e.g., to determine actual vehicle ranges based on different routes and driving conditions). To facilitate convergence of range prediction model 300 during training, the EV and sensor system data 304 may be standardized, to ensure that the values of individual parameters of the EV and sensor system data 304 inputted into range prediction model 300 are expressed within similar ranges, such that large gradient updates (e.g., above a threshold) do not occur during training. In some examples, synthetized data may be used to generate the training pairs, where known relationships between certain actions and energy efficiency may be leveraged to create plausible driving scenarios.

Alternatively, in some embodiments, range prediction model 300 may be trained using reinforcement learning. In still other embodiments, range prediction model 300 may be a different type of model, such as a decision tree generated by human experts based on historical and/or statistical driving data.

During training, the vehicle maneuvering range gains 310 and the cooperative driving range gains 312 outputted by range prediction model 300 may be summed to generate a combined range gain 340. A gradient descent algorithm may then be applied to maximize combined range gain 340 over a plurality of iterations. Combined range gain 340 may be described by the following equation 1:

$$T_G = \sum_{i=1}^{n+m} \emptyset_i \qquad\qquad 1$$

where $T_G$ is the combined range gain. $T_G$ is maximized over a period of stable performance of the EV, based on individual vehicle maneuvering range gains 310 and the cooperative driving range gains 312. The individual vehicle maneuvering range gains 310 may be represented by the following equation 2:

$$\emptyset_n = g_n(\alpha_n, f_n) \qquad\qquad 2$$

where $\emptyset_n$ is a range gain outputted by range prediction model 300 corresponding to an individual vehicle maneuvering range maximization action f of n total vehicle maneuvering range maximization actions, and $\alpha$ is an adaptive vector for the individual vehicle maneuvering range gains 310 that is learned during training. In some cases, $\alpha$ may also be a predefined value or vector. The individual cooperative driving range gains 312 may be represented by the following equation 3:

$$\emptyset_m = g_m(\beta_m, f_m) \qquad\qquad 3$$

where $\emptyset_m$ is a range gain outputted by range prediction model 300 corresponding to an individual cooperative driving range maximization action f of m total cooperative driving range maximization actions, and $\beta$ is a predefined value or adaptive vector value for the cooperative driving range gains 312.

The goal is to maximize the EV range gain $T_G$ by adding each range maximization action $f_i$ with adaptive weight factors $\alpha_i$ and $\beta_i$, where i=1,2, ..., n+m, where n is the number of individual vehicle maneuvering range maximization actions and m is the number of individual cooperative driving range maximization actions. The values/vectors $\alpha_i$ and $\beta_i$ would be adaptively learned during training of range prediction model 300 by maximizing $T_G$ (total combined range gain). As mentioned above, for some range maximization actions, certain weights $\alpha_i$ and $\beta_i$ may be initially fixed and may or may not change during training. For example, initial weight factors $\alpha_i$ and $\beta_i$ could be 1.0 when the impact of each cooperative driving range maximization action cannot be anticipated, when there is no available data or input. In other examples, the initial weight factors could be different number based on knowledge of the route, vehicle, battery, etc. For example, under certain conditions, a speed adjustment could have more impact than a lane change with respect to saving energy. In some scenarios, after training with EV driving data input, the weight factors could be updated for different scenarios and/or conditions at the EV, and the weight factors could be updated adaptively in accordance with other inputs, driving histories, etc. For example, a first weight factor for speed or braking could be higher than a second weight factor for a lane change. A second weight factor for a traffic light could be 0 for a road with a single lane and no traffic signals. A third weight factor for the platooning driving could be 0 when there is tail wind, and a different value when there is a head wind.

The analysis and computation of the vectors $\alpha_i$ and $\beta_i$ may be derived from an in-vehicle system (e.g., range prediction module 218), edge device (e.g., edge device 127), or cloud-based range prediction system, depending on the computational complexity and available information. Due to a complexity of the training as a result of many different inputs, the training may be most efficiently performed at a cloud-based system in general. The learned weights from training may then be transmitted to local models at either or both of the EV and the edge device, which could use the local models on data collected in real time from the EV and other vehicle information, road side information, and local environmental information. In some examples, the edge device may refine the local model and update the weights locally with the EV and other vehicle data input. The EV could also update the weights with based on vehicle data for increased EV range based on the driving history, provided the EV has available computational resources. In this way, load balancing may be performed between the EV, edge device, and cloud server to determine the most suitable weight vectors for range prediction model 300 and weight factors $\alpha_i$ and $\beta_i$. under various conditions. The range gain $\varnothing_i$ per each range maximization action $f_i$ of is a function (g) of $\alpha_i$ or $\beta_i$ and each factor ($f_i$).

In some embodiments, range prediction model 300 may include one or more convolutional layers, which in turn comprise one or more convolutional filters (e.g., a convoluted neural network architecture). The convolutional filters may comprise a plurality of weights, wherein the values of the weights are learned during a training procedure. The convolutional filters may correspond to one or more patterns in the data, thereby enabling range prediction model 300 to identify and extract patterns from the data to generate a range prediction. In other embodiments, range prediction model 300 may not be a convolutional neural network, and may be a different type of neural network.

When supervised learning is used, training range prediction model 300 on the training pairs may include iteratively inputting input data of each training pair into input layer 306. Range prediction model 300 may propagate the input data from the input layer, through one or more hidden layers, until reaching the output layer, in accordance with techniques known in the art. Range prediction model 300 may be configured to iteratively adjust one or more of a plurality of weights of range prediction model 300 in order to maximize the EV range gain $T_G$, based on an assessment of differences between the outputted range gain and a target range gain of each training pair. The weights and biases of range prediction model 300 may then be adjusted based on the difference between the output and the target (e.g., ground truth) range gain of the relevant training pair. The difference (or loss), as determined by a loss function, may be back-propagated through range prediction model 300 to update the weights (and biases) of the convolutional layers. In some embodiments, back propagation of the loss may occur according to a gradient descent algorithm, wherein a gradient of the loss function (a first derivative, or approximation of the first derivative) is determined for each weight and bias of range prediction model 300. Each weight (and bias) of range prediction model 300 is then updated by adding the negative of the product of the gradient determined (or approximated) for the weight (or bias) with a predetermined step size. Updating of the weights and biases may be repeated until the weights and biases of range prediction model 300 converge, or the rate of change of the weights and/or biases of range prediction model 300 for each iteration of weight adjustment are under a threshold.

Referring now to FIG. 4, an exemplary method 400 is shown for predicting a range of an EV (e.g., EV 102) based on sensor and system data of the EV, including an SOC of the EV, and provide recommendations with respect to actions that may be performed at the vehicle to maintain or extend the range of the vehicle. Method 400 may be performed by a range prediction module of the vehicle (e.g., range prediction module 218 of FIG. 2), based on instructions stored in a memory of the vehicle (e.g., memory 214). In some embodiments, one or more steps of method 400 may be executed by a cloud-based range prediction system such as range prediction system 106 of FIGS. 1 and 2, or by an edge computing system located, for example, in an element of infrastructure in a vicinity of the EV (e.g., edge device 127 of an infrastructure element 126).

In various examples, method 400 may be performed iteratively over a plurality of periods of stable performance of the EV, such as under conditions where a speed and other driving conditions are approximately constant and do not vary widely (e.g., when the energy consumption of the EV can be most reliably predicted. Method 400 may be performed iteratively and/or regularly during the periods of stable performance starting from when the EV begins to move to when the EV arrives at a destination or charging station.

Method 400 begins at 402, where method 400 includes measuring/estimating vehicle operating conditions. Measuring/estimating the EV operating conditions may include determining a state of charge (SOC) of the battery, estimating a current consumption of stored energy based on a route of the vehicle and/or other operating conditions, as well as determining whether the vehicle is being propelled by the battery or whether the vehicle is stopped.

At 404, method 400 includes determining whether a new range prediction model used by the range prediction module is available to be downloaded from the cloud-based range prediction system. If at 404 it is determined that a new range prediction model is available to be downloaded, method 400 proceeds to 406. At 406, method 400 includes downloading and replacing the range prediction model stored at the vehicle. Alternatively, if at 404 it is determined that a new range prediction model is not available, method 400 proceeds to 408. In this way, a master range prediction model (e.g., range prediction model 227) may be stored and trained in the cloud, based on data retrieved from a plurality of EVs, and a copy of the master range prediction model (e.g., range prediction model 219) may be maintained up to date at the EV.

At 408, method 400 includes collecting driving data from a plurality of systems and/or sensors (e.g., sensors 250) of the EV, where the driving data includes both operational data and environmental data of the vehicle. The driving data may include, for example, data received from sensors of the vehicle (e.g., sensors 250) including wheel speed sensors, battery sensors that detect an SOC of the battery and other energy information, brake and steering sensors, and/or other sensors that detect different aspects of vehicle operation. The sensors may include exterior sensors and/or cameras that sense or measure environmental data, such as road conditions, weather conditions, or traffic conditions, and other environmental information acquired from cameras or sensors of the EV (e.g., sensors 250). The sensors may include an inclinometer, an anemometer, an altimeter, radar/LIDAR, etc. The driving data may also include data from systems of the vehicle such as windshield wipers, lighting, audio, and/or other electronic systems (radio, power steering, heat, etc.) that consume electricity, route data from navigation systems, and the like. The sensor and system data may include any data relevant to a consumption of electrical energy at the EV.

At 410, method 400 includes processing the collected data using the range prediction model to generate a prediction of the range of the vehicle, based on the collected driving data. The range prediction model may also output a plurality of predicted individual range gains attributed to different actions that the driver could take to maintain the estimated or predicted range of the vehicle, as described above in reference to FIG. 3.

At 412, processing the collected data using the range prediction model may include requesting and receiving data from the cloud-based range prediction system and/or an edge-based server. For example, a request may be sent to one or more edge devices installed at nearby traffic lights, toll booths, or other elements of infrastructure along a route of the EV for data regarding other traffic lights, traffic light timing, vehicles and/or traffic, weather, delays, obstacles, construction, etc. on portions of the route, which may be used as inputs into the range prediction model to predict range gains achieved through various cooperative driving strategies. Interaction between the EV and the edge device is described in greater detail below in reference to FIG. 5.

Additionally or alternatively, processing the collected data using the range prediction model may include offloading processing on the cloud-based range prediction system and/or the edge-based server. That is, the various components described herein, including the range prediction model, recommendation algorithm, and a cooperative driving manager could operate at any of the EV, an edge device and a cloud-based server. If bandwidth is a limiting factor, most or all of the processing may be performed at the EV. If computation is a limiting factor, resource-heavy portions of the processing may be performed at the cloud-based server or the edge device. A latency of the transmission of the collected data may depend on conditions including signal quality dynamics and bandwidth allocation, which may be performed by different network providers. In some scenarios, the latency may be prohibitive for offloading the processing on the cloud-based range prediction system and/or the edge-based server.

For example, the range prediction model may be continuously trained at a combination of the cloud-based server, the EV and/or the edge device. That is, a first portion of training the range prediction model may be performed at the cloud-based server, based on historical data. A subsequent portion of the training of the range prediction model may then be performed at the EV, based on data acquired at the EV. A portion of the training may also be performed at an element of infrastructure (edge device), based on data acquired at the element of infrastructure. When weights of the range prediction model are updated, the updated weights may subsequently be propagated to the EV, the edge device, and/or the cloud-based server. In this way, a computational load of training the range prediction model may be balanced between the EV, the edge device, and/or the cloud-based server. An available bandwidth for transmitting data between the EV, the edge device, and/or the cloud-based server may also be used to balance the computational load.

At 414, method 400 includes determining whether a difference between the range estimate generated by the range estimator and the range prediction generated by the range prediction system/model is greater than a threshold difference. If at 414 it is determined that the difference is greater than the threshold difference, method 400 proceeds to 416.

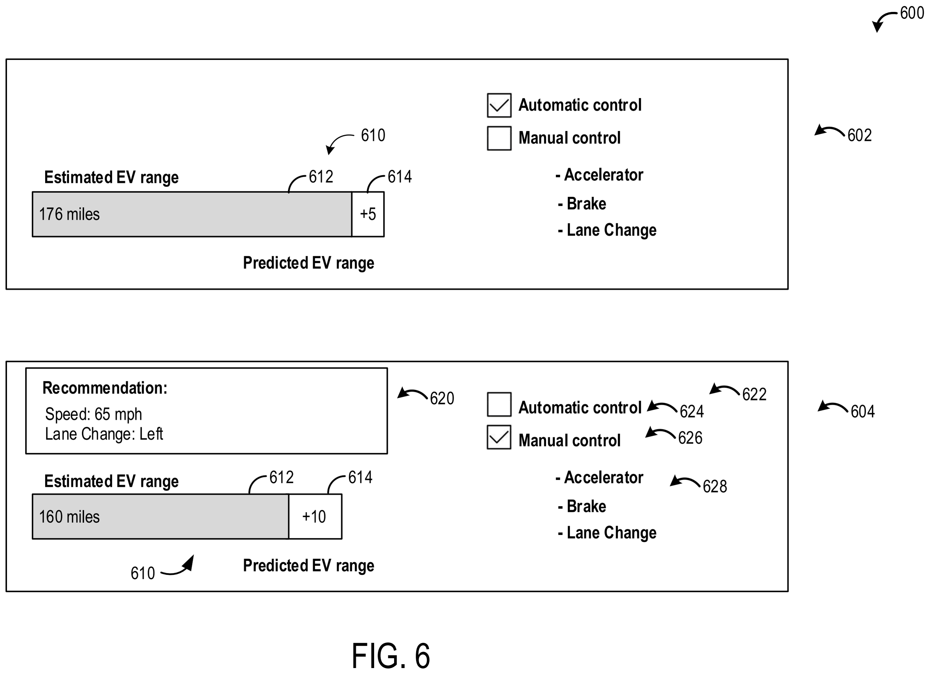

At 416, method 400 includes calculating and displaying the predicted range in a UI of the EV (e.g., range prediction UI 209 of FIG. 2). An exemplary display of the predicted range is shown in FIG. 6.

If at 414 the difference is not greater than the threshold difference, method 400 proceeds to 418. At 418, method 400 includes determining whether one or more predetermined range maximization actions (corresponding to outputs of the range prediction model) is worth taking, to increase or maintain the predicted range. In various examples, a recommendation algorithm (recommendation algorithm 220 and/or 342) implemented in a memory of the EV may determine whether one or more predetermined range maximization actions is worth taking.

In one example, the recommendation algorithm may determine that a range maximization action is worth taking if a corresponding range gain outputted by the range prediction model (e.g., one of vehicle maneuvering range gains 310 or cooperative driving range gains 312) is above a threshold range gain. For example, if a range maximization action is predicted to generate a range gain of 1%, meaning that if the range maximization action is performed at the vehicle, the predicted range of the EV may be increased by 1%, then the range maximization action may be worth taking. In another example, a range maximization action that is greater than other range maximization actions may be considered worth taking. For example, if forming a platoon with other vehicles is determined to achieve a greater increase in the predicted range than adjusting a speed of the EV, changing a lane of the EV, and other range maximization actions, the range maximization action of forming the platoon may be considered worth taking. In other examples, a different algorithm may be used to determine whether a range maximization action is worth taking.

If at 418 it is determined that no range maximization actions are worth taking (e.g., no range maximization action is predicted to have an effect on the predicted range), method 400 proceeds back to 408, and method 400 includes continuing to collect environmental and operational data from the vehicle sensors and systems, for a next iteration of processing using the range prediction model. Alternatively, if at 418 it is determined that one or more range maximization actions are worth taking, method 400 proceeds to 420.

At 420, method 400 includes displaying one or more driving recommendations corresponding to the one or more range maximization actions worth taking in the UI of the EV. The one or more driving recommendations may be generated by the recommendation algorithm. The recommendation algorithm may take the one or more selected range maximization actions as input, and may convert the one or more selected range maximization actions into specific driving instructions. For example, the recommendation algorithm may convert encodings of the one or more selected range maximization actions outputted by the range prediction model into natural language, such as "move into the right lane", or "increase the speed of the vehicle to 60 mph". The recommendation algorithm may additionally prioritize a plurality of driving recommendations. For example, a first driving recommendation having a greater impact on the predicted range may be displayed first or emphasized, and a second driving recommendation having a lesser impact on the predicted range may be displayed second or deemphasized. When the driver sees the driving recommendations in the UI, the driver may perform one or more of the driving recommendations to achieve the predicted range gain associated with the corresponding range maximization actions.

At 422, method 400 optionally includes automatically performing the one or more range maximization actions. That is, in examples where the EV is an autonomous vehicle, or can be operated in a semi-autonomous mode, the range maximization actions can be automatically performed by a controller of the vehicle. In some examples, the driver may select whether the range maximization actions should be automatically performed via the UI, as shown in FIG. 6.

At 424, method 400 includes storing driving data, including data generated as a result of performing the range maximization actions, for further training and refinement of the range prediction model. Method 400 ends.

Referring now to FIG. 5, an exemplary method 500 is shown for providing information regarding cooperative driving strategies to an EV (e.g., EV 102), including providing instructions for operating the vehicle in accordance with one or more cooperative driving strategies. Method 500 may be performed by a cooperative operation module of an edge device (e.g., cooperative operation module 270 of edge device 127), based on instructions stored in a memory of the edge device (e.g., memory 264). For example, the edge device may be located in an element of infrastructure in a vicinity of the EV, such as at a traffic light, toll booth, etc. Method 500 may be performed as part of method 400 described above.

Method 500 begins at 502, where method 500 includes receiving a request for cooperative driving data from an EV. When the request is received, at 504, method 500 includes determining whether conditions are met for cooperative driving. For example, the conditions may be met when other vehicles are detected travelling on a route of the EV, or when elements of infrastructure such as traffic lights are detected on the route. If no vehicles, traffic lights, etc., are detected along the route of the EV, conditions may not be met for cooperative driving.

If at 504 it is determined that conditions are not met for cooperative driving, method 500 proceeds to 506. At 506, method 500 includes notifying the EV that conditions are not met for cooperative driving, and method 500 ends. Alternatively, if conditions for cooperative driving are met at 504, method 500 proceeds to 508.

At 508, method 500 includes requesting driving data (e.g., EV sensor and system data 304 used by the range prediction model) from the EV. A second set of driving data may also be requested of other vehicles that are near the EV or that are travelling along the route of the EV, which may be different from the driving data requested from the EV. For example, the second set of driving data may include speed, location, and vehicle load data, but may not include energy consumption data of the other vehicles, which may or may not be EVs. Data may also be requested from other elements of infrastructure. For example, if the EV is approaching a set of traffic lights, method 500 may include requesting light timing information from the set of traffic lights, to determine whether an operation of the EV could be coordinated with the timing of the set of traffic lights.

At 510, method 500 includes predicting range gains of the EV as a result of performing one or more cooperative driving range maximization actions. To predict the range gains, the edge device may perform various simulations using models included at the edge device. In some cases, the models may include a copy of the range prediction model installed at the edge device. Further, in some examples, the edge device may request data from or send data to be processed at a cloud-based service, such as range prediction system 106 of FIGS. 1 and 2.

At 512, method 500 includes determining whether the range gains predicted at 510 are greater than a threshold range gain. In some examples, a combined range gain calculated by summing various range gains predicted at 510 may be compared with the threshold range gain. In other examples, each range gain predicted at 510 may be compared with the threshold range gain. If at 512 it is determined that the range gains associated with the cooperative driving range maximization actions are not greater than the threshold range gain, method 500 proceeds to 514, where method 500 includes notifying the EV that the predicted range of the EV may not be affected by adopting a cooperative driving strategy, and method 500 ends. Alternatively, if at 512 it is determined that the range gains associated with the cooperative driving range maximization actions are greater than the threshold range gain, method 500 proceeds to 516.

At 516, method 500 includes transmitting the range gains to the EV for inclusion in a range prediction calculation performed by the range prediction module (or cloud-based range prediction system), described in method 400.

At 518, method 500 optionally includes transmitting instructions for performing a cooperative driving strategy to the EV, to the other vehicles, if relevant, and to affected elements of infrastructure, if relevant. For example, the edge device may transmit instructions to the EV and the other vehicles for forming a platoon to exploit air dynamics for greater energy efficiency (e.g., where a plurality of vehicles travel at a same speed and at a predefined distance from each other, such that air flows over the plurality of vehicles more efficiently and with less drag than over each vehicle of the plurality of vehicles when not travelling at the same speed and/or at the predefined distance). Additionally or alternatively, the edge device may transmit instructions to the EV for coordinating a speed of the EV to pass upcoming traffic lights when the traffic lights are green, for example. As another example, if the EV is operating in a platoon comprising a plurality of vehicles, and no other vehicles are detected in an area of a traffic light, the edge device may transmit instructions to the traffic light to coordinate the traffic light to change to green at a time when the platoon is passing the traffic light.

In some examples, the instructions may be transmitted along with the range gains, to be optionally implemented by the driver of the EV. In other examples, when the driver selects an option in a range prediction UI of the vehicle, or when the option is selected by a controller of the EV, a request for the instructions may be sent to the edge device, and the instructions may be sent to the EV in response to the request. Method 500 ends.

FIG 6 shows an exemplary range prediction UI 200, which may be a non-limiting example of range prediction UI 209. Range prediction UI 600 may be used to display to a user both an estimated range of an EV generated by a conventional range estimator provided in an EV (e.g., range estimator 221) and a predicted range of the EV generated by the range prediction system described herein (e.g., range prediction system 106 and/or range prediction module 218).

In a first state 602 of range prediction UI 600, the estimated range and the predicted range are integrated into a single display element 610. In the depicted embodiment, an estimated range of 176 miles is shown in a first status bar 612. The predicted range is five miles more than the estimated range (e.g., 181 miles), which is shown in a second status bar 614 appended to first status bar 612. Second status bar 614 may be differentiated from first status bar 612 by color, for example. In this way, an operator of the EV may view the difference between the predicted range and the estimated range. In examples where the predicted range is the same as the estimated range, the predicted range may not be displayed. Additionally, in first state 602, the range prediction system/module may determine that no range maximization actions may be taken to achieve range gains. As a result, no driving recommendations for increasing or maintaining the range of the EV may be displayed to the operator.

In a second state 604 of range prediction UI 600, the estimated range and the predicted range are integrated into single display element 610, and an estimated range of 160 miles is shown in first status bar 612. The predicted range is 10 miles more than the estimated range (e.g., 170 miles), and is shown in second status bar 614 appended to first status bar 612. However, in second state 604, the range prediction system/module has determined that two range maximization actions may be taken to achieve range gains: a speed adjustment to bring the speed of the EV to 65 mph, and a lane change to a left lane of a road on which the EV is travelling. As a result, two corresponding driving recommendations are displayed in a recommendation panel 620 of UI 600. The driver may see the driving recommendations, and may opt to perform the range maximization actions to achieve the range gains. In the second state 604, second status bar 614 may indicate that a combined range gain of 10 miles may be achieved by following the driving recommendations and performing the range maximization actions. The combined range gain of 10 miles may be a sum of a first range gain associated with adjusting the speed of the EV to 65 mph (e.g., speed adjustment range gain 320 of FIG. 3) and a second range gain associated with changing the lane of the EV (e.g., lane change range gain 322). If the driver performs the range maximization actions, the predicted range of 170 miles may be achieved. If the driver does not perform the range maximization actions, the predicted range of 170 miles may not be achieved.

Range prediction UI 600 also includes a control element 622 for selecting between an automatic control of the EV and a manual control of the EV. If an automatic control checkbox 624 is selected (as in first state 602), a controller of the EV may automatically perform the range maximization actions. Alternatively, if a manual control checkbox 626 is selected (as in second state 604) the driver may optionally perform the range maximization actions. An indication 628 may be provided of one or more systems of the EV that may be automatically controlled or manually controlled, depending on a driver selection. That is, in a semi-autonomous driving mode of the EV, the driver may toggle between automatic control of the range maximization actions and manual control of the range maximization actions by selecting either automatic control checkbox 624 or manual control checkbox 626, respectively.

It should be appreciated that range prediction UI 600 is for illustration and not for limitation. In other embodiments, range prediction UI 600 may include additional elements, or different elements that indicate the predicted range and/or the estimated range in a different manner, without departing from the scope of this disclosure. For example, in some examples, individual range gains associated with following each displayed recommendation may also be displayed in UI 600. Further, in some examples, achieved gains to the range of the EV by following the recommendations, either collectively or individually, may be saved and converted into incentives, such as points, which may be applied towards various benefits such as reducing insurance payments, EV charging rate discounts, credits towards dealer services, and the like.

Thus, systems and methods are proposed for generating a range prediction for an EV that may be more accurate than a current range estimation system. In order to enable this EV range support, data is collected including in-vehicle data such as loads, speeds, etc.; static data such as terrain, elevation, etc.; and dynamic data such as road conditions, weather, traffic, traffic signals, etc. The data may be inputted into a range prediction model, which may be located at the vehicle, in a cloud, or at an edge device in an element of infrastructure along a route of the vehicle. The range prediction model may output a predicted range of the vehicle, which may be displayed to the driver, in particular, when the predicted range differs from an estimated range generated by the current range estimation system.

The proposed systems and methods also provide recommendations for actions that may be taken at the EV to extend, maintain, and/or maximize the range of the EV, either by a driver or by a controller of the vehicle when operating in an autonomous or semi-autonomous mode. The recommended actions may include in-vehicle maneuvering, such as adjustments to speed, braking, lane changes, etc., to maximize EV range, and inter-vehicle cooperation, where vehicle-to-infrastructure (V2X) communications or related connectivity is leveraged to allow the vehicle to form or join platooning operations with other vehicles to leverage advantageous air dynamics, collaborate with traffic signals and traffic control to minimize unnecessary speeding, braking, or lane changes. When appropriate, the EV could be re-routed to save battery range based on vehicle cooperation data.

By following the recommendations, the EV may save energy, operate more efficiently, and achieve greater ranges. In this way, the proposed system benefits EV drivers and the automotive/EV industry more generally, by reducing range anxiety and increasing the confidence and comfort of EV drivers, and providing the drivers with accurate and adaptive information and recommendations on how to manage their battery charge and driving range. As a result, the adoption and the usage of the EVs may be increased, by increasing the attractiveness and the competitiveness of the EVs compared to the conventional vehicles.

The technical effect of providing a predicted range of an EV based on a wide array of sensor and system data of the vehicle, and predicting individual range gains that may be achieved by performing one or more range maximization actions, is that an energy efficiency of the EV may be increased and a range of the EV may be extended.

The disclosure also provides support for a method for a controller of an electric vehicle (EV), the method comprising: collecting data from sensors and systems of the EV during operation of the EV, predicting a range of the EV based on the collected data using a range prediction model, and further predicting a plurality of range gains of the EV associated with performing one or more one or more range maximization actions of the EV based on the collected data, each range gain a predicted increase to the range of the EV resulting from performing a corresponding range maximization action of the one or more range maximization actions, comparing the predicted range to an estimated range of the EV generated by a range estimator included in the EV, and in response to determining that a difference between the predicted range and the estimated range is greater than a threshold difference, displaying the predicted range on a display of the EV, and displaying, on the display, one or more recommendations for the one or more range maximization actions to be performed at the EV to maintain or increase the range of the EV, the one or more range maximization actions recommended based on the predicted range gains of the one or more range maximization actions outputted by the range prediction model. In a first example of the method, the data collected from the sensors and systems during operation of the EV includes: operational data of the EV from onboard sensors including battery state of charge (SOC), energy consumption data, vehicle speed, load, braking, and route data, and static data of a surrounding environment of the EV, including route and geographical data, and EV charging infrastructure data, and dynamic data including weather, road condition, and traffic data. In a second example of the method, optionally including the first example, the one or more range maximization actions include vehicle maneuvering recommendations and cooperative driving recommendations. In a third example of the method, optionally including one or both of the first and second examples, the vehicle maneuvering recommendations include one or more of: a recommended adjustment of a speed of the EV, a recommended lane change of the EV, and a recommended application of a brake of the EV. In a fourth example of the method, optionally including one or more or each of the first through third examples, the cooperative driving recommendations include one or more of: engaging in platooning, wherein an operation of the EV is coordinated with one or more nearby vehicles, a traffic signal aided operation of the EV, wherein operation of the EV is adjusted based on one or more upcoming traffic signals or a timing of the one or more upcoming traffic signals are adjusted based on the operation of the EV, and rerouting the EV based on traffic, road conditions, and/or weather conditions. In a fifth example of the method, optionally including one or more or each of the first through fourth examples, the cooperative driving recommendations are generated based on data acquired at an edge device located at an element of infrastructure along a route of the EV, and displaying the one or more range maximization actions outputted by the range prediction model on the display further comprises receiving data or operational instructions from the edge device. In a sixth example of the method, optionally including one or more or each of the first through fifth examples, the range prediction model is stored at a cloud-based range prediction system, and predicting the range of the EV based on the collected data using the range prediction model further comprises transmitting the collected data to the cloud-based range prediction system, and receiving the predicted range of the EV from the cloud-based range prediction system. In a seventh example of the method, optionally including one or more or each of the first through sixth examples, a copy of the range prediction model is stored in a memory of one of the edge device and the EV, and predicting the range of the EV using the range prediction model further comprises predicting the range of the EV at the one of the edge device and the EV. In a eighth example of the method, optionally including one or more or each of the first through seventh examples, the range prediction model is a machine learning (ML) or deep learning (DL) model trained at the cloud-based range prediction system using data collected from a plurality of EVs communicatively coupled to the cloud-based range prediction system. In a ninth example of the method, optionally including one or more or each of the first through eighth examples, the method further comprises:, after training the ML or DL model at the cloud-based range prediction system, training the ML or DL model further at the EV or at the edge device, and updating weights of the ML or DL model at the EV or at the edge device based on data acquired at the EV or at the edge device, respectively. In a tenth example of the method, optionally including one or more or each of the first through ninth examples, the range prediction model is a rules-based system generated by human experts. In a eleventh example of the method, optionally including one or more or each of the first through tenth examples, the EV is configured to operate in an autonomous or semi-autonomous mode, and the method further comprises performing the one or more range maximization actions without human intervention. In a twelfth example of the method, optionally including one or more or each of the first through eleventh examples, the method further comprises: displaying the predicted range and the estimated range in a single integrated display element.

The disclosure also provides support for a range prediction system for an electric vehicle (EV), the range prediction system comprising: a processor, and a memory storing instructions that when executed, cause the processor to: in a first stage, train a machine learning (ML) model to output a predicted range of each EV of a plurality of EVs, based on data collected from sensors and systems of a plurality of EVs during operation of the plurality of EVs, and additionally output predicted range increases that may be achieved by performing one or more of a plurality of predetermined range maximization actions at the EV, and in a second stage: receive data collected from sensors and systems of the EV during operation of the EV, predict a range of the EV based on the received data, using the trained ML model, and transmit the predicted range and the predicted range increases to the EV. In a first example of the system, the data received from the EV in the second stage includes: operational data of the EV including energy consumption, speed, load, braking, and route data, weather, road condition, and traffic data collected by external sensors and/or cameras of the EV, and weather, road condition, and traffic data transmitted to the EV by an edge device installed in an element of infrastructure located on a route of the vehicle. In a second example of the system, optionally including the first example, the predetermined range maximization actions include at least one of vehicle maneuvering recommendations for changing a speed, lane, or route of the vehicle, and cooperative driving recommendations for coordinating an operation of the EV with other EVs travelling on the route of the EV. In a third example of the system, optionally including one or both of the first and second examples, the cooperative driving recommendations are generated based on the traffic data transmitted to the EV by the edge device. In a fourth example of the system, optionally including one or more or each of the first through third examples, further instructions are stored in the memory that when executed, cause the processor to transmit a copy of the ML model to the EV to be deployed at the EV.

The disclosure also provides support for a method for a controller of an electric vehicle (EV), the method comprising: predicting a first range of the EV using a range prediction model, comparing the predicted first range with a second range of the EV estimated by the controller, in response to a difference between the predicted first range and the estimated second range being greater than a threshold difference, displaying both of the predicted first range and the estimated second range in an integrated display on a display screen of the vehicle, displaying on the display screen one or more vehicle maneuvering recommendations and/or cooperative driving recommendations generated based on predicted range gains associated with the one or more vehicle maneuvering recommendations and/or cooperative driving recommendations, the predicted range gains outputted by the range prediction model, and in response to a selection made by an operator of the vehicle via a control element displayed on the display screen, automatically performing the vehicle maneuvering recommendations and/or cooperative driving recommendations. In a first example of the method, the EV is an autonomous vehicle, and the method further comprises automatically performing the vehicle maneuvering recommendations and/or cooperative driving recommendations without receiving an input from the operator.

When introducing elements of various embodiments of the present disclosure, the articles "a," "an," and "the" are intended to mean that there are one or more of the elements. The terms "first," "second," and the like, do not denote any order, quantity, or importance, but rather are used to distinguish one element from another. The terms "comprising," "including," and "having" are intended to be inclusive and mean that there may be additional elements other than the listed elements. As the terms "connected to," "coupled to," etc. are used herein, one object (e.g., a material, element, structure, member, etc.) can be connected to or coupled to another object regardless of whether the one object is directly connected or coupled to the other object or whether there are one or more intervening objects between the one object and the other object. In addition, it should be understood that references to "one embodiment" or "an embodiment" of the present disclosure are not intended to be interpreted as excluding the existence of additional embodiments that also incorporate the recited features.

In addition to any previously indicated modification, numerous other variations and alternative arrangements may be devised by those skilled in the art without departing from the spirit and scope of this description, and appended claims are intended to cover such modifications and arrangements. Thus, while the information enhancement described above with particularity and detail in connection with what is presently deemed to be the most practical and preferred aspects, it will be apparent to those of ordinary skill in the art that numerous modifications, including, but not limited to, form, function, manner of operation and use may be made without departing from the principles and concepts set forth herein. Also, as used herein, the examples and embodiments, in all respects, are meant to be illustrative only and should not be construed to be limiting in any manner.

**Claims**

1. A method for a controller of an electric vehicle, EV, the method comprising:

collecting data from sensors and systems of the EV during operation of the EV;
predicting a range of the EV based on the collected data using a range prediction model, and further predicting a plurality of range gains of the EV associated with performing one or more one or more range maximization actions of the EV based on the collected data, each range gain a predicted increase to the range of the EV resulting from performing a corresponding range maximization action of the one or more range maximization actions;
comparing the predicted range to an estimated range of the EV generated by a range estimator included in the EV; and
in response to determining that a difference between the predicted range and the estimated range is greater than a threshold difference, displaying the predicted range on a display of the EV; and
displaying, on the display, one or more recommendations for the one or more range maximization actions to be performed at the EV to maintain or increase the range of the EV, the one or more range maximization actions recommended based on the predicted range gains of the one or more range maximization actions outputted by the range prediction model.

2. The method of claim 1, wherein the data collected from the sensors and systems during operation of the EV includes:

operational data of the EV from onboard sensors including battery state of charge (SOC), energy consumption data, vehicle speed, load, braking, and route data; and
static data of a surrounding environment of the EV, including route and geographical data, and EV charging infrastructure data; and
dynamic data including weather, road condition, and traffic data.

3. The method of claim 1 or 2, wherein the one or more range maximization actions include vehicle maneuvering recommendations and cooperative driving recommendations.

4. The method of claim 3, wherein the vehicle maneuvering recommendations include one or more of:

a recommended adjustment of a speed of the EV;
a recommended lane change of the EV; and
a recommended application of a brake of the EV.

5. The method of claim 3 or 4, wherein the cooperative driving recommendations include one or more of:

engaging in platooning, wherein an operation of the EV is coordinated with one or more nearby vehicles;
a traffic signal aided operation of the EV, wherein operation of the EV is adjusted based on one or more upcoming traffic signals or a timing of the one or more upcoming traffic signals are adjusted based on the operation of the EV; and
rerouting the EV based on traffic, road conditions, and/or weather conditions.

6. The method of claim 5, wherein the cooperative driving recommendations are generated based on data acquired at an edge device located at an element of infrastructure along a route of the EV, and displaying the one or more range maximization actions outputted by the range prediction model on the display further comprises receiving data or operational instructions from the edge device.

7. The method of claim 6, wherein the range prediction model is stored at a cloud-based range prediction system, and predicting the range of the EV based on the collected data using the range prediction model further comprises transmitting the collected data to the cloud-based range prediction system, and receiving the predicted range of the EV from the cloud-based range prediction system.

8. The method of claim 7, wherein a copy of the range prediction model is stored in a memory of one of the edge device and the EV, and predicting the range of the EV using the range prediction model further comprises predicting the range of the EV at the one of the edge device and the EV.

9. The method of claim 7 or 8, wherein the range prediction model is a machine learning (ML) or deep learning (DL) model trained at the cloud-based range prediction system using data collected from a plurality of EVs communicatively coupled to the cloud-based range prediction system.

10. The method of claim 9, further comprising, after training the ML or DL model at the cloud-based range prediction system, training the ML or DL model further at the EV or at the edge device, and updating weights of the ML or DL model at the EV or at the edge device based on data acquired at the EV or at the edge device, respectively.

11. The method of any of claims 7 to 10, wherein the range prediction model is a rules-based system generated by human experts.

12. The method of any preceding claim, wherein the EV is configured to operate in an autonomous or semi-autonomous mode, and the method further comprises performing the one or more range maximization actions without human intervention, and preferably the method further comprising displaying the predicted range and the estimated range in a single integrated display element.

13. A range prediction system for an electric vehicle, EV, the range prediction system comprising:
a processor, and a memory storing instructions that when executed, cause the processor to:

in a first stage, train a machine learning (ML) model to output a predicted range of each EV of a plurality of EVs, based on data collected from sensors and systems of a plurality of EVs during operation of the plurality of EVs, and additionally output predicted range increases that may be achieved by performing one or more of a plurality of predetermined range maximization actions at the EV; and
in a second stage:

receive data collected from sensors and systems of the EV during operation of the EV;
predict a range of the EV based on the received data, using the trained ML model; and
transmit the predicted range and the predicted range increases to the EV.

14. The range prediction system of claim 13, wherein the data received from the EV in the second stage includes:

operational data of the EV including energy consumption, speed, load, braking, and route data;
weather, road condition, and traffic data collected by external sensors and/or cameras of the EV; and
weather, road condition, and traffic data transmitted to the EV by an edge device installed in an element of infrastructure located on a route of the vehicle.

15. The range prediction system of claim 14, wherein the predetermined range maximization actions include at least one of vehicle maneuvering recommendations for changing a speed, lane, or route of the vehicle, and cooperative driving recommendations for coordinating an operation of the EV with other EVs travelling on the route of the EV.

FIG. 1

FIG. 2

FIG. 3

EP 4 751 989 A1

start — 400

— 402
Measure/estimate vehicle operating conditions

— 404
New range prediction model available? — YES → Download and replace range prediction model — 406

NO

— 408
Collect operational and environmental data from vehicle sensors and systems

— 410
Process collected data using range prediction model to generate a range prediction and predicted range gains of a plurality of range maximization actions

— 412
Receive data from and/or offload processing to cloud/edge server

— 414
Difference between range estimate and range prediction > threshold difference? — YES → Calculate and display predicted range in integrated display in UI — 416

NO

— 418
One or more range maximization actions worth taking?

NO

YES

— 420
Display driving recommendations corresponding to one or more range maximization actions in UI

— 422
Automatically perform the range maximization actions

— 424
Store driving data for further refinement of range prediction model

end

FIG. 4

500

```
          start

Receive request for cooperative driving data from EV          502

                                                              504
        Conditions          NO    Notify vehicle that         506
      met for cooperative ─────▶  conditions are not met for ─────▶  end
         driving?                  cooperative driving

          YES

Request driving data from EV, nearby vehicles, and elements of infrastructure   508

Predict range gains of the EV as a result of performing one or more cooperative driving   510
range maximization actions

                                                              512
          Range             NO    Notify EV that              514
      gains > threshold range ───▶ cooperative driving does ─────▶ end
          gain?                    not extend range

          YES

Transmit range gains to EV for inclusion in range prediction calculation   516

Transmit cooperative driving instructions to EV, other vehicles, and affected elements   518
of infrastructure

          end
```

FIG. 5

FIG. 6

EP 4 751 989 A1

# EUROPEAN SEARCH REPORT

**Application Number**

EP 25 20 8577

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 112 549 970 A (GUANGZHOU CHENGXING INTELLEGENT ELECTRIC AUTOMOTIVE TECH CO LTD ET AL.) 26 March 2021 (2021-03-26) * paragraphs [0048], [0056] - [0059], [0078], [0086], [0099], [0114], [0123] - [0126] * | 1-15 | INV. B60L58/12 |
| X | US 2024/257575 A1 (LIU YONGKANG [US] ET AL) 1 August 2024 (2024-08-01) | 1,13 | |
| A | * paragraphs [0046] - [0060], [0077] - [0086], [0104] - [0110] * | 2-12,14, 15 | |

**TECHNICAL FIELDS SEARCHED (IPC)**

B60L

The present search report has been drawn up for all claims

| Place of search | Date of completion of the search | Examiner |
|---|---|---|
| The Hague | 2 April 2026 | Bellatalla, Filippo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P4C01)

## ANNEX TO THE EUROPEAN SEARCH REPORT
## ON EUROPEAN PATENT APPLICATION NO.

EP 25 20 8577

This annex lists the patent family members relating to the patent documents cited in the above-mentioned European search report.
The members are as contained in the European Patent Office EDP file on
The European Patent Office is in no way liable for these particulars which are merely given for the purpose of information.

02-04-2026

| Patent document cited in search report | | Publication date | Patent family member(s) | | Publication date |
|---|---|---|---|---|---|
| CN 112549970 | A | 26-03-2021 | NONE | | |
| US 2024257575 | A1 | 01-08-2024 | US | 2024257575 A1 | 01-08-2024 |
| | | | US | 2025278959 A1 | 04-09-2025 |

EPO FORM P0459

For more details about this annex : see Official Journal of the European Patent Office, No. 12/82